# FASCICULE DE BREVET EUROPEEN

(11) **EP 2 880 742 B1**
(45) Date de publication et mention de la délivrance du brevet: **14.10.2020**
(21) Numéro de dépôt: 13756621.2
(22) Date de dépôt: 30.07.2013
(51) Int. Cl.: H02K 1/14, H02K 29/03, H02K 1/27

(54) **MOTEUR ELECTRIQUE OPTIMISE A DENTS ETROITES**
OPTIMIERTER ELEKTROMOTOR MIT ENGEN ZÄHNEN
OPTIMIZED ELECTRIC MOTOR WITH NARROW TEETH

(30) Priorité: 01.08.2012 FR 1257469
(43) Date de publication de la demande: 10.06.2015
(60) Demande divisionnaire: 19193615.2
(73) Titulaire: Moving Magnet Technologies, 25000 Besançon (FR)
(72) Inventeur: HYPPIAS, Arnaud, F-39700 Fraisans (FR); TAVERNIER, Stéphane, F-25770 VAUX LES PRES (FR); BIWERSI, Stéphane, F-25140 Frambouhans (FR)
(74) Mandataire: IP Trust
(86) Numéro de dépôt international: PCT/FR2013/051830
(87) Numéro de publication internationale: WO 2014/020273

(56) Documents cités:
- EP-A1- 0 872 943
- EP-A2- 2 463 990
- DE-A1-102009 000 681
- FR-A1- 2 919 441
- JP-A- 2002 199 630
- JP-A- 2002 252 954
- JP-A- 2008 228 363
- US-A1- 2011 018 384

## Description

### DOMAINE TECHNIQUE DE L'INVENTION

La présente invention se rapporte au domaine des moteurs électriques, et plus particulièrement aux machines à aimants permanents mono- ou polyphasées de petite à moyenne puissance, c'est-à-dire aptes à délivrer des puissances mécaniques allant jusqu'à quelques kilowatts.

### ETAT DE LA TECHNIQUE ANTERIEURE

Les performances des machines électriques sont caractérisées par un certain nombre de critères dont l'importance dépend du type d'applications visées.

Un élément dimensionnant majeur est la constante moteur, encore appelée Km, et exprimée en unité de couple par racine carrée de Watt, c'est-à-dire reflétant le couple que le moteur peut générer pour une puissance dissipée dans les bobines donnée.

Un autre élément qui peut s'avérer important est le couple sans courant, qu'il est fréquemment nécessaire de réduire au maximum pour diverses raisons (bruit, pertes, usure mécanique, réversibilité d'un moto-réducteur...).

Dans le cadre de ce brevet, nous allons plus particulièrement nous intéresser à l'optimisation de la constante moteur pour un encombrement axial et un diamètre donnés, tout en s'attachant à avoir un moteur présentant un couple sans courant minimal, dans le cadre de moteurs à topologie « radiale » c'est-à-dire ayant un flux plan et des dents s'étendant radialement.

L'encombrement axial sera ici défini comme la hauteur du stator augmenté de la hauteur des têtes de bobines dépassant du stator.

Plus généralement, la capacité d'industrialisation d'un tel moteur est bien évidemment un facteur d'arrière-plan à prendre en compte.

Enfin, nous allons également nous intéresser de manière préférentielle à des structures présentant un équilibre des forces radiales (permettant de réduire des problématiques telles que le bruit ou l'usure des éléments de guidage du rotor).

Les critères mentionnés ci-dessus conduisent en général à des compromis dans la définition des structures qui ne permettent pas toujours d'obtenir une structure optimisée.

Pour des moteurs de petite à moyenne puissance, il est fréquent de rencontrer des topologies à 6 ou 12 dents statoriques, celle à 12 dents permettant d'obtenir les meilleures performances en termes de Km.

Les topologies de stator ayant 12 dents de largeurs angulaires égales permettent de supprimer, en association avec des rotors aimantés ayant un nombre de paires de pôles égal à 5+2R (R entier) et non multiple de 3, les harmoniques de couple sans courant jusqu'au 12^{ème} rang (exclu). Le premier harmonique apparaissant et majoritaire a donc une période 12 fois plus petite que la période électrique du moteur. L'amplitude des harmoniques diminuant avec leur rang, ces moteurs sont donc particulièrement appréciables pour les applications nécessitant un minimum de couple en l'absence de courant.

On connait dans l'art antérieur le brevet US 7,595,577 présentant un moteur ayant au stator 12 dents égales et élargies à leur extrémité.

Cette solution représente un moyen classique pour minimiser le couple sans courant dans les applications exigeantes en la matière. En effet, le couple sans courant étant lié aux positions préférentielles que le rotor à aimants peut prendre du fait des espacements entre les dents statoriques, il apparait comme judicieux de réduire au minimum ces espaces, voire dans certains cas de les supprimer en faisant se contacter les dents dans le but de diminuer l'harmonique de rang 12.

Cependant ce type de solution a plusieurs inconvénients. En premier lieu, le rapprochement (ou le contact) entre les dents, induit des flux de fuite nuisant aux performances du moteur, même si les zones de contact (appelées communément isthmes) sont arrangées pour être saturables magnétiquement.

Par ailleurs, ces topologies obligent soit à bobiner directement dans les encoches, soit à réaliser le stator en plusieurs sous-ensembles, ce qui peut être gênant en termes de réalisation industrielle. Enfin, l'espace disponible pour le cuivre des bobinages n'est pas optimal.

On connaît également la demande de brevet allemande DE102009000681 décrivant une machine électrique comprenant: un rotor comportant 14 pôles, le rotor étant agencé de façon à pouvoir tourner autour d'un axe central, et un stator comportant 12 dents de stator qui font saillie dans une direction radiale par rapport à l'axe central dans la direction du rotor caractérisé en ce que chacune des dents de stator est muni d'une bobine de stator, dans lequel deux bobines de stator adjacentes sont à chaque fois connectés en série les uns aux autres pour former une paire de bobines de stator, l'une des paires de bobines de stator étant associés à une phase est à chaque fois reliée à un point neutre dédié, de manière à former un circuit de point d'étoile. Pour ce type de réalisation de l'art antérieur, la machine synchrone à dent droite prévoit des largeurs de dents aussi large que celle des encoches, généralement une largeur de dent proche de 15°. Les figures du brevet DE102009000681 ne permettent pas d'appréhender de manière claire la largeur angulaire des dents, qui varie d'ailleurs d'une dent à l'autre, avec des valeurs de 15,1° voire 15,8° sur la figure 3 de ce document de l'art antérieur.

Le brevet EP0872943 décrit un autre exemple de machine tournante électrodynamique à aimants permanents ayant un stator a bobinage concentré.

On connait également la demande de brevet WO93/07672 qui présente une structure de moteurs à dents droites. Cependant, la topologie proposée comporte 4 paires de pôles aimantés au rotor, ce qui ne permet pas une compensation naturelle de l'harmonique 6 du couple de détente et oblige à apporter des modifications de forme aux aimants du rotor pour réduire le couple de détente. De plus, si cette structure utilise des dents droites, celles-ci ont une largeur importante (environ 50% du pas polaire), ce qui n'est pas optimisé.

On connait le brevet FR2919441 qui présente un motoréducteur, qui comprend un moteur électrique polyphasé comprenant un stator excité par des bobines électriques et un rotor à pôles magnétiques. Le stator a des secteurs angulaires avec des rayons respectifs dont le rapport est compris entre 1,2 et 2. Les secteurs comprennent des dents larges et des dents étroites s'étendant radialement à partir d'une couronne annulaire. Les dents larges ont une largeur supérieure ou égale au double de la largeur des dents étroites. Une encoche a une largeur supérieure à celle d'une dent étroite. Le secteur est inférieur à 220 degrés et regroupe les bobines.

Dans un certain nombre de ses brevets, la demanderesse a introduit des solutions permettant de remédier à tout ou partie des inconvénients cités en utilisant des topologies à dents droites associées à des rotors à 5 ou 7 paires de pôles tout en montrant qu'il était possible de trouver des configurations en termes de largeur de dents statoriques pour lesquelles le couple sans courant pouvait être supprimé ou pour le moins minimisé de manière significative.

En particulier, le brevet US 8,102,093 présente un moteur à 12 dents statoriques droites, 6 étant bobinées, 6 ne l'étant pas, avec la particularité que les dents bobinées sont au moins deux fois plus larges que les dents non bobinées. Les dents larges portant les bobines permettent ainsi de maximiser le Km dans certaines conditions par une perméance augmentée. Le choix des largeurs de dents se fait de manière à obtenir une compensation optimale de l'harmonique 6 du couple de détente apparaissant du fait de la largeur non égale entre les dents.

Ce type de structure répond parfaitement aux besoins de réduction du couple sans courant, d'équilibre des forces radiales, permet un bobinage indépendant sur corps de bobine rapportés ensuite sur le stator et conduit à des niveaux de performance satisfaisants.

Cependant, si l'on se place à encombrement axial et diamètre constants, on s'aperçoit, de façon surprenante pour l'homme de métier, que dans certains cas cette topologie ne conduit pas au résultat optimal et qu'il serait profitable d'avoir des dents égales mais plus étroites que les enseignements de l'état de la technique ne le proposent, afin d'optimiser le Km moteur.

A titre d'exemple, même si avec des têtes de bobine plus importantes le stator doit être réduit en hauteur pour garder un encombrement constant, on trouve, avec 12 dents étroites et de largeur égales, de meilleures configurations en termes de Km qu'avec 12 dents de taille différentes, et ce avec des largeurs de dents inférieures à la moitié du pas polaire.

### EXPOSE DE L'INVENTION

La présente invention vise donc à proposer une solution aux problèmes mentionnés ci-dessus.

Plus particulièrement, l'invention vise à proposer un moteur électrique mono ou polyphasé comprenant un stator portant trois bobines et constitué de 12 x N dents droites s'étendant radialement (c'est-à-dire perpendiculairement à l'axe de rotation du moteur), N étant un entier supérieur ou égal à 1, et d'une largeur angulaire *alpha* égale, mesurée à leur extrémité depuis le centre du moteur, et un rotor présentant P paires de pôles aimantés tel que P = 5 + 2 x R, P étant non multiple de trois, R étant un entier supérieur ou égal à 0, où *alpha* est compris entre [360°/(12 x N)]/3 et [360°/ (12 x N)]/2.

Le moteur électrique présente trois bobines installées sur des dents espacées de 60° et globalement réparties sur un espacement angulaire (téta) inférieur ou égal à 120°.

Si l'on souhaite obtenir une réduction encore plus forte du couple sans courant, on peut également utiliser des procédés permettant de réduire, au moins localement, l'entrefer entre les dents. Il est ainsi possible de modifier la structure statorique afin d'obtenir des isthmes saturables sur une partie de la hauteur, ou encore de rapporter une ou plusieurs bagues ferromagnétiques.

Ainsi, dans un mode de réalisation particulier, le moteur électrique présente un stator réalisé par un empilement de deux types de tôles différentes, les dents statoriques adjacentes étant en contact sur le premier type de tôle par le biais d'isthmes magnétiques saturables.

Alternativement le moteur électrique présente au moins une bague ferromagnétique insérée dans l'entrefer radial entre les dents du stator et le rotor aimanté.

Il est aussi envisageable que le moteur électrique présente un stator qui comporte deux types de tôles formant un retrait apte à recevoir une bague ferromagnétique.

Selon une autre variante possible, le moteur électrique présente un stator ayant une couronne externe mise en place après le bobinage des dents afin d'assurer la fermeture du circuit magnétique.

Concernant le rotor, selon une variante préférentielle, l'aimant est de type bague présentant une alternance de pôles magnétiques correspondant à une aimantation radiale, ou tout au moins s'en rapprochant. Dans ce cas, le rotor est inscrit dans le stator. Cependant, il est également possible d'utiliser un aimant de type disque avec une aimantation de type axial, l'aimant tournant dans ce cas au-dessus des dents s'étendant radialement, les bobines étant en retrait radialement de l'aimant.

### BREVE DESCRIPTION DES FIGURES

L'invention sera mieux comprise au vu des figures suivantes :
La figure 1 représente un moteur à 12 dents élargies selon l'art antérieur.
La figure 2 représente un moteur à 12 droites, 6 larges et 6 étroites, selon l'art antérieur.
La figure 3 représente un moteur selon un exemple utile à la compréhension de l'invention.
La figure 4 représente la variation théorique de la constante de couple moteur en fonction de la largeur de dents dans un moteur à 12 dents égales étroites, à encombrement axial constant.
La figure 5 présente une vue en coupe d'un stator selon un exemple secondaire utile à la compréhension de l'invention utilisant des alternances de tôles présentant, pour certaines, des isthmes saturables.
La figure 6 présente une vue en coupe d'un stator selon un autre exemple secondaire utile à la compréhension de l'invention utilisant des couronnes ferromagnétiques dans l'entrefer dans une première variante.
La figure 7 présente une vue en coupe d'un stator selon un autre exemple secondaire utile à la compréhension de l'invention utilisant des couronnes ferromagnétiques dans l'entrefer suivant une deuxième variante.
La figure 8 présente une vue de face d'un moteur selon un exemple utile à la compréhension de l'invention utilisant 5 paires de pôles et 12 dents étroites bobinées.
La figure 9 présente une vue de face d'un moteur selon un exemple utile à la compréhension de l'invention utilisant 7 paires de pôles et des couronnes ferromagnétiques dans l'entrefer.
La figure 10 présente une vue de face d'un moteur selon un exemple utile à la compréhension de l'invention utilisant 11 paires de pôles et des couronnes ferromagnétiques dans l'entrefer.
La figure 11 présente une vue de face d'un moteur selon l'invention dans un autre mode de réalisation utilisant trois bobines installées dans un espace angulaire limité.
Les figures 12 et 13 présentent un exemple utile à la compréhension de l'invention avec un rotor disque aimanté axialement suivant deux vues différentes.
La figure 14 représente une alternative de réalisation.

### DESCRIPTION DETAILLEE DU MODE DE REALISATION

La description suivante donne des exemples utiles à la compréhension de l'invention.

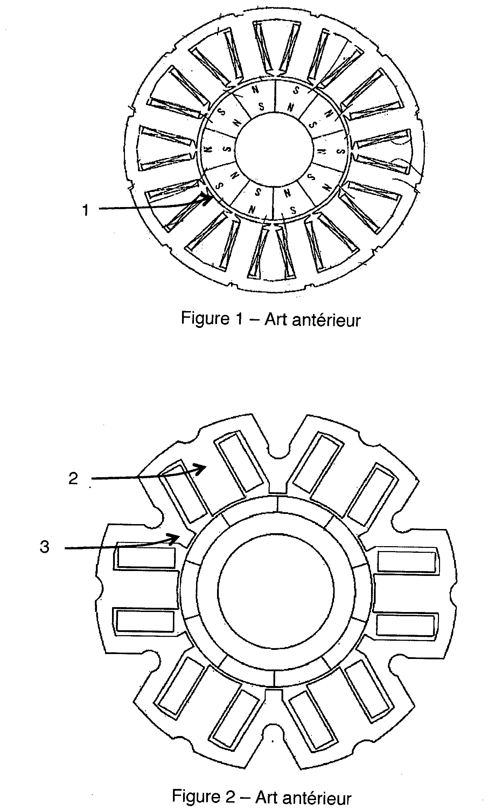

La figure 1 présente une figure du brevet US7595577 qui présente un moteur à 5 paires de pôles aimantés au rotor et 12 dents bobinées au stator, chacune de ces dents présentant un élargissement (1) au niveau de leur extrémité en regard du rotor aimanté. Cette réalisation est une représentation typique des solutions à dents élargies pour minimiser le couple sans courant avec les défauts indiqués dans le préambule de ce brevet : flux de fuite entre dents, complexité du bobinage, espace réduit pour les bobinages...

Le moteur de la figure 2 propose une solution pertinente pour remédier à ces défauts selon le brevet FR2899396 de la demanderesse. Il met en œuvre une alternance de dents larges (2) et étroites (3) dont la largeur angulaire, prise en extrémité de dents en regard du rotor, varie d'un facteur supérieur à 2, typiquement 22° pour les dents larges et 10° pour les dents étroites, ceci toujours pour un rotor à 5 paires de pôles magnétiques comme dans l'exemple précédent. Ces largeurs différentes conduisent à une compensation originale des harmoniques du couple de détente tout en permettant de libérer un espace important pour le bobinage.

Cependant, dans certaines conditions, si l'on s'intéresse à la densité de couple maximale pour un encombrement axial donné, tout en visant un très faible couple sans courant, on s'aperçoit que cette solution peut avoir des limites.

En premier lieu, malgré la méthode de compensation des harmoniques, les imperfections de l'aimant empêcheront toujours de descendre au-dessous d'une certaine valeur de couple sans courant.

Or, un moteur à 12 dents égales présente une compensation naturelle de cet harmonique 6 (le premier harmonique théoriquement présent est l'harmonique de rang 12). Si l'on allie ceci à la réduction de la largeur des dents, on s'aperçoit que l'on peut, dans certains cas, obtenir de meilleures performances, grâce à un volume de cuivre supérieur, tout en évitant une saturation trop forte dans ces dents.

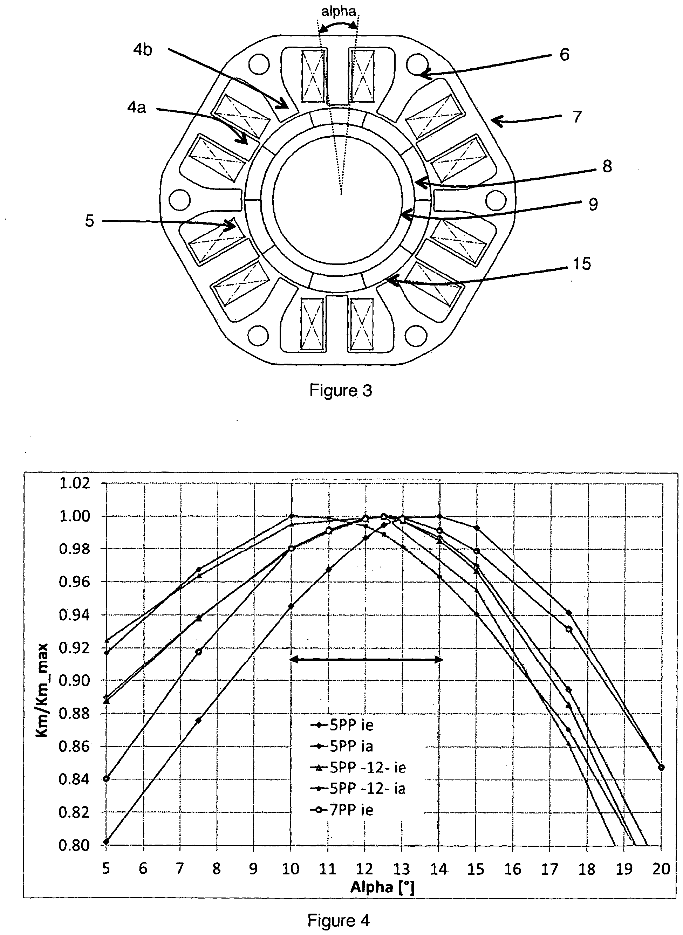

La figure 3 illustre, suivant une vue de face et en coupe, un moteur à 12 dents et 5 paires de pôles aimantés selon un exemple utile à la compréhension de l'invention ayant les mêmes dimensions extérieures que celui de la figure 2 avec des dents étroites (4a) et (4b) s'étendant radialement de largeur angulaire alpha = 13° - mesuré sur l'extrémité de dents -, toutes identiques.

La section selon un plan perpendiculaire à l'axe médian radial est rectangulaire, ainsi que la section selon un plan transversal. Les dents (4a, 4b) sont orientées radialement.

Le stator (7) est constitué de dents (4a), (4b) et de bobines (5). Une dent (4a) sur deux est entourée d'une bobine électrique (5) - typiquement en cuivre ou aluminium - deux bobines (5) espacées de 180° mécanique autour du centre du moteur formant ainsi une phase électrique et l'ensemble des 6 bobines (5) formant un moteur triphasé. Les dents (4b) ne portant pas les bobines (5) présentent avantageusement, mais de manière non limitative, des perçages (6) pour permettre la fixation des tôles constituant le stator sans modifier les performances magnétiques et le retour de flux magnétique se faisant à l'arrière des dents (4a) et (4b). Ces perçages (6) sont prévus dans la zone d'épanouissement où la dent s'élargie pour se prolonger par une zone de ceinture périphérique.

Le rotor, séparé d'un entrefer (15) du stator (7), est typiquement constitué d'une culasse (9) ferromagnétique portant des pôles aimantés (8) sous la forme d'une bague uniforme aimantée de manière multipolaire radiale- alternance Nord/Sud - ou de secteurs discrétisés aimantés uniformément de manière à réaliser une aimantation se rapprochant d'une direction radiale.

On peut aussi réaliser un rotor en encastrant des aimants dans une culasse suivant les nombreux enseignements de la technique que l'on peut trouver à l'heure actuelle dans le domaine.

A hauteur égale de moteur, constituée par l'épaisseur de tôles et l'épaisseur des bobines, mais grâce à une répartition différente de ces hauteurs, on arrive ainsi à un gain en Km voisin de 7% avec ce moteur à dents étroites égales comparé avec le moteur de la figure 2. De plus, de par la compensation naturelle de l'harmonique 6, un tel moteur présente un couple sans courant meilleur et moins sensible aux variations liées à l'aimant (inhomogénéité de la matière, de l'aimantation...).

La figure 4 justifie le choix (pour le cas de la figure précédente) de la largeur de dents à 13° via un graphique présentant la variation de Km pour 3 différentes configurations de moteurs (5 et 7 paires de pôles avec 6 dents bobinées - dénommés respectivement *5PP* et *7PP*-, et 5 paires de pôles avec 12 dents bobinées - dénommé *5PP -12*-), et ce à iso-encombrement axial (indice ie), incluant l'épaisseur des chignons de bobines, et à iso-longueur active (indice ia). La longueur active est la hauteur des tôles au stator mesurée dans le sens de l'axe de rotation (18) du rotor. Cette figure 4 représente ainsi l'évolution, en fonction de la largeur (alpha) de dents, du ratio Km, pour chaque largeur de dent donné, sur le Km maximal observé sur la plage angulaire étudiée.

Comme on peut le constater, l'optimum de Km pour 5 paires de pôles / 6 dents bobinées est d'environ 13° (soit [360°/(12 x N)]/2,3), et de manière générale les optimums se situent dans une plage comprise entre [360°/(12 x N)]/3 et [360°/(12 x N)]/2, et plus particulièrement 10° et 14° pour 5 et 7 paires de pôles si N=1 (12 dents au stator) et selon que l'on considère une comparaison à iso-encombrement ou à iso-longueur active. La plage revendiquée est symbolisée, sur cette figure 4, par la largeur de la double flèche.

Comme nous l'avons vu précédemment, une solution classique pour réduire le couple sans courant consiste à utiliser des dents élargies voire se touchant via des zones (appelées isthmes) saturables. Outre les problématiques de bobinage, ceci induit des fuites réduisant les performances du moteur. Or, il n'est pas nécessaire d'utiliser un tel profil de dents sur toute la hauteur du stator.

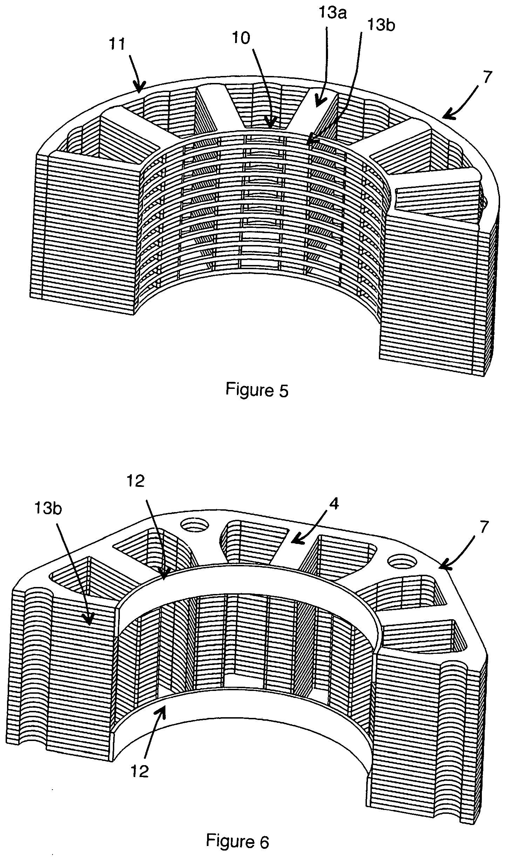

On peut ainsi imaginer, comme sur la figure 5, utiliser un stator (7) - ici visualisé en une coupe - constitué d'une alternance de tôles (13a) présentant des isthmes (10) et de tôles (13b) ne présentant pas d'isthme. Le bobinage des dents du stator se fait alors par l'arrière des dents avant la mise en place de la couronne extérieure (11) venant assurer la fermeture du circuit magnétique. Le ratio entre les tôles (13a) présentant des isthmes (10) et les tôles (13b) n'en présentant pas peut être inférieur à 1. Typiquement, l'utilisation d'isthmes (10) sur un équivalent du tiers de la hauteur seulement conduit déjà à de bons compromis sur le couple de détente, sans nuire au couple utile par une fuite de flux au niveau des isthmes (10).

Cette solution est efficace, mais peut donc compliquer le processus de bobinage. Une autre solution consiste à conserver la structure statorique d'origine, puis à rapporter une ou plusieurs bagues en un matériau ferromagnétique.

La figure 6 présente une première solution utilisant des bagues ferromagnétiques (12) directement dans l'entrefer entre le stator (7) et le rotor (non visible). En effet, ces bagues (12) sont placées devant les dents étroites (4) et permettent de diminuer l'amplitude du couple sans courant et autorisent l'emploi d'un seul type de tôles (13b) pour l'ensemble du stator (7). L'entrefer (15) entre stator (7) et rotor (non visible) est par contre globalement légèrement augmenté.

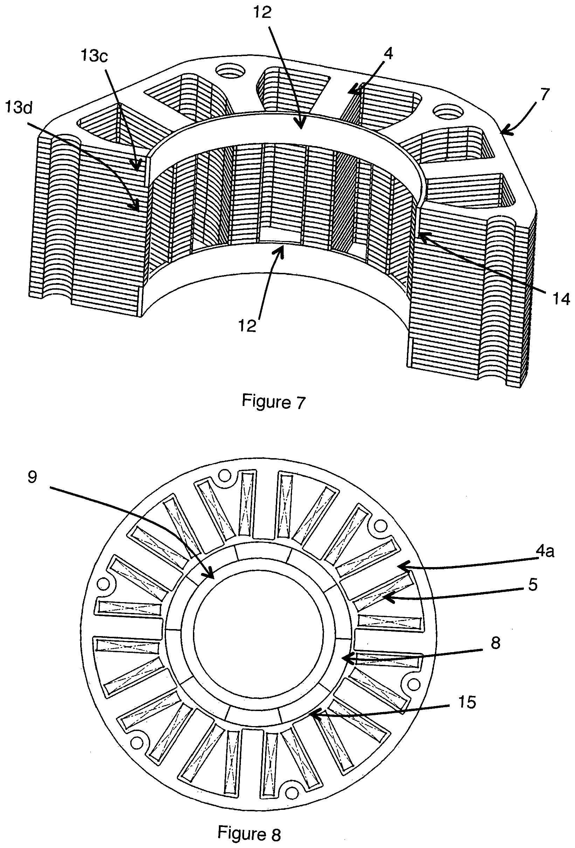

Ainsi, une autre alternative consiste à placer les bagues ferromagnétiques (12) de part et d'autre du paquet de tôles, comme illustré à la figure 7, en utilisant des tôles (13c) et (13d) ayant deux diamètres intérieurs différents de manière à créer un retrait (14) apte à recevoir la ou les bagues (12). Cette solution, si elle nécessite de diminuer un peu la profondeur des bobines (5), a le mérite de permettre de conserver un faible entrefer (15).

La figure 8 présente un moteur selon un exemple utile à la compréhension de l'invention qui présente 12 dents étroites (4a) identiques et portant chacune une bobine (5). Le rotor présente 5 paires de pôles aimantés (8) portés par une culasse (9).

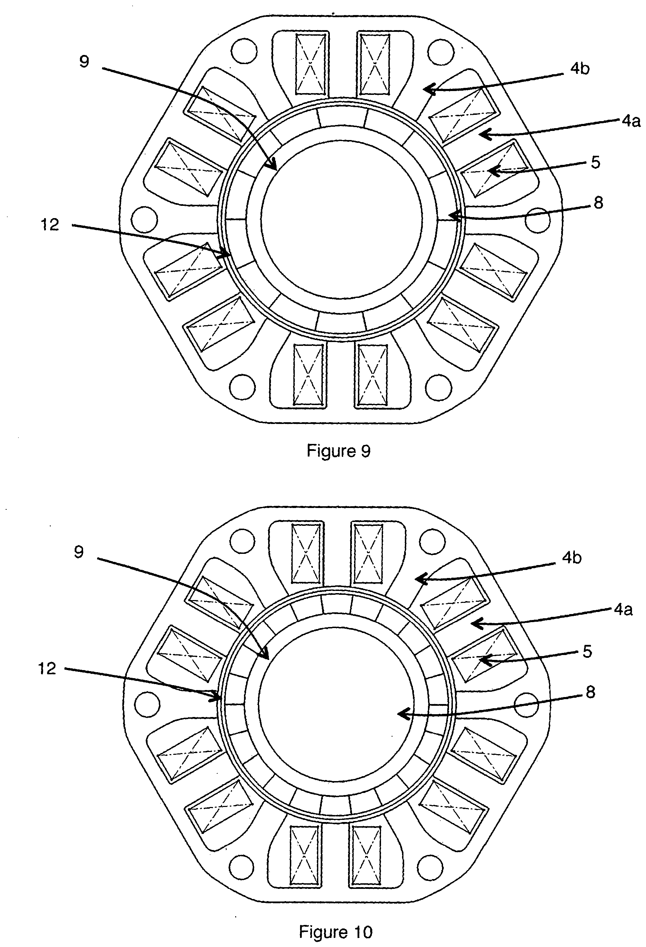

La figure 9 présente un moteur présentant 12 dents étroites de largeur angulaire égale et à 7 paires de pôles aimantés (8). Une ou plusieurs bagues ferromagnétiques (12), dont la fonction a été décrite précédemment, sont placées dans l'entrefer (15) entre rotor et stator (7).

La figure 10 présente un moteur présentant 12 dents étroites de largeur angulaire égale et à 11 paires de pôles aimantés (8). Une ou plusieurs bagues ferromagnétiques (12), dont la fonction a été décrite précédemment, sont placées dans l'entrefer (15) entre rotor et stator (7).

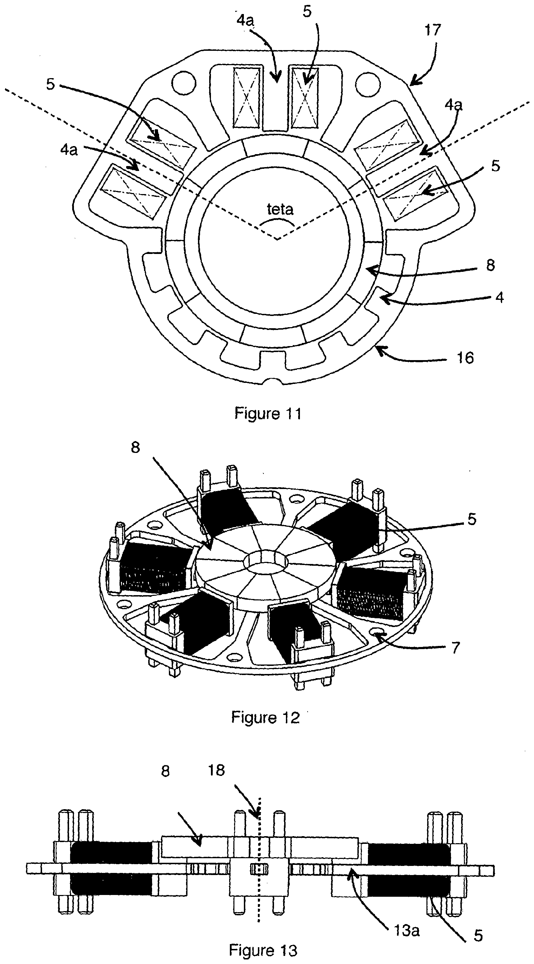

Sur la figure 11, est présenté un mode de réalisation de l'invention revendiquée destiné à être utilisé dans une application nécessitant un faible encombrement axial (suivant l'épaisseur du stator, selon l'axe de rotation du rotor). En effet, le moteur ne présente que trois bobines électriques (5) portées par trois dents (4a) au stator, ces dents étant séparées de 60° mécanique de sorte que seulement une dent sur deux est bobinée et dans un espacement angulaire (téta) de seulement 120° au total. Cette configuration permet de libérer de l'espace à l'opposé de cet espacement angulaire (téta) formé, afin de pouvoir placer, par exemple, un ensemble d'engrenages (non montré) réalisant une réduction de la vitesse du rotor pour déplacer un organe extérieur (non montré) à moindre vitesse et à couple plus fort. Cet ensemble de réduction peut alors être placé au plus près du stator dans un faible encombrement axial et radial à l'opposé de l'espacement angulaire (téta), à la faveur d'un premier rayon extérieur (16) de stator (7) plus faible que le deuxième rayon extérieur (17) de stator (7) dans lequel est inscrite la partie du stator (7) où sont placées les bobines (5).

Les figures 12 et 13 illustrent, dans le cas d'un stator (7) à 6 bobines (5), la possibilité d'utiliser un aimant (8) de type disque présentant une alternance de pôles aimantés axialement (soit parallèle à l'axe de rotation (18) et perpendiculaire à l'extension radiale du stator (7)). Ce type d'aimant peut être avantageux du point de vue économique, un aimant disque étant comparativement moins coûteux à élaborer qu'un aimant de type bague, mais aussi en termes d'homogénéité de la matière. Ce type de structure conduit par contre à raccourcir les bobines (5), ou tout au moins à les mettre en retrait radialement, pour permettre de poser l'aimant (8). Dans cet exemple utile à la compréhension de l'invention, le stator (7) est constitué d'une seule tôle (13a), mais il peut être envisagé d'utilise plusieurs tôles.

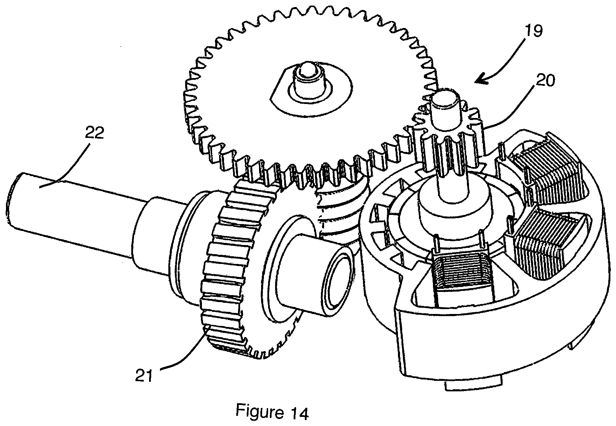

La figure 14 représente un exemple de réalisation non limitative d'un motoréducteur utilisant un moteur selon l'invention. Le moteur selon l'invention sera particulièrement intéressant lorsque utilisé en associant avec un système de transformation mécanique de mouvement (réduction ou multiplication) permettant alors de constituer un ensemble motoréducteur efficace. En effet, ses qualités de forte densité de couple avec courant rendront l'ensemble motoréducteur compact et son faible couple sans courant en fera un ensemble motoréducteur capable de revenir en position (souvent appelé « failsafe » en anglais) lorsque un système de rappel élastique est positionné en amont ou en aval du système de transformation mécanique.

En figure 14 est présenté un moteur selon l'invention associé à un système de réduction de mouvement (19). Le rotor du moteur engraine sur un premier pignon (20) et le dernier pignon (21) est solidaire d'un arbre de sortie mécanique (22) auquel peut-être associé un organe extérieur à déplacer (non montré).

## Revendications

1. Moteur électrique mono ou polyphasé comprenant un stator portant trois bobines et constitué de 12 x N dents droites s'étendant radialement, N étant un entier supérieur ou égal à 1, et d'une largeur angulaire *alpha* égale, mesurée à leur extrémité depuis le centre du moteur, et un rotor présentant P paires de pôles aimantés tel que P = 5 + 2 x R, P étant non multiple de trois, R étant un entier supérieur ou égal à 0, où *alpha* est compris entre [360°/(12 x N)]/3 et [360°/(12 x N)]/2, et les bobines (5) sont au nombre de trois installées sur des dents (4a) espacées de 60° et globalement réparties sur un espacement angulaire (téta) inférieur ou égal à 120°.

2. Moteur électrique selon la revendication 1 caractérisé en ce *alpha* est compris entre [360°/(12 x N)]/3 et [360°/(12 x N)]/2,1.

3. Moteur électrique selon l'une des revendications précédentes **caractérisé en ce que** les P paires de pôles au rotor sont aimantées radialement.

4. Moteur électrique selon l'une quelconque des revendications 1 à 3 **caractérisé en ce que** les P paires de pôles au rotor sont aimantées axialement.

5. Moteur électrique selon l'une des revendications précédentes **caractérisé en ce que** le stator (7) est réalisé par un empilement de deux types de tôles (13a, 13b) différentes, les dents (4) statoriques adjacentes étant en contact sur le premier type de tôle (13a) par le biais d'isthmes (10) magnétiques saturables.

6. Moteur électrique selon l'une des revendications 1 à 5 **caractérisé en ce qu'**au moins une bague ferromagnétique (12) est insérée dans l'entrefer (15) entre les dents (4) du stator (7) et le rotor aimanté.

7. Moteur électrique selon l'une des revendications 1 à 5 **caractérisé en ce que** le stator (7) comporte deux types de tôles (13c, 13d) formant un retrait (14) apte à recevoir une bague ferromagnétique (12).

8. Moteur électrique selon l'une des revendications précédentes **caractérisé en ce que** le stator (7) présente une couronne externe (11) mise en place après le bobinage des dents afin d'assurer la fermeture du circuit magnétique.

9. Moteur électrique selon la revendication précédente, **caractérisé en ce que** les dents (4b) ne portant pas les bobines (5) présentent dans la partie s'évasant pour former une ceinture périphérique un perçage (6).

10. Ensemble motoréducteur comprenant un moteur selon la revendication 1 comprenant un ensemble de transformation mécanique de mouvement et un arbre en sortie dudit ensemble de transformation ainsi qu'un système de rappel élastique est positionné en amont ou en aval du système de transformation mécanique.

## Patentansprüche

1. Ein- oder Mehrphasen-Elektromotor, umfassend einen Stator, der drei Wicklungen trägt und aus 12 × N sich radial erstreckenden geraden Zähnen gebildet ist, wobei N eine ganze Zahl größer oder gleich 1 ist, und mit einer Winkelbreite *alpha,* die gemessen an ihren Enden von der Mitte des Motors aus, gleich ist, und einen Rotor mit P Magnetpolpaaren, so dass P = 5 + 2 × R, wobei P kein Vielfaches von drei ist und R eine ganze Zahl größer oder gleich 0 ist, wobei *alpha* zwischen [360°/(12 × N)]/3 und [360°/(12 × N)]/2 liegt und die Anzahl der Wicklungen (5) drei ist, die an Zähnen (4a) angebracht sind, die in einem Abstand von 60° voneinander angeordnet und im Wesentlichen über einen Winkelabstand (teta) kleiner als oder gleich 120° verteilt sind.

2. Elektromotor nach Anspruch 1, **dadurch gekennzeichnet, dass** *alpha* zwischen [360°/(12 × N)]/3 und [360°/(12 × N)]/2,1 liegt.

3. Elektromotor nach einem der vorhergehenden Ansprüche, **dadurch gekennzeichnet, dass** die P Polpaare am Rotor radial magnetisiert sind.

4. Elektromotor nach einem der Ansprüche 1 bis 3, **dadurch gekennzeichnet, dass** die P Polpaare am Rotor axial magnetisiert sind.

5. Elektromotor nach einem der vorhergehenden Ansprüche, **dadurch gekennzeichnet, dass** der Stator (7) aus einem Blechpaket aus zwei verschiedenen Blechtypen (13a, 13b) hergestellt ist, wobei die benachbarten Statorzähne (4) über den ersten Blechtyp (13a), durch sättigbare magnetische Engstellen (10), in Kontakt sind.

6. Elektromotor nach einem der Ansprüche 1 bis 5, **dadurch gekennzeichnet, dass** mindestens ein ferromagnetischer Ring (12) in den Luftspalt (15) zwischen den Zähnen (4) des Stators (7) und dem magnetisierten Rotor eingesetzt ist.

7. Elektromotor nach einem der Ansprüche 1 bis 5, **dadurch gekennzeichnet, dass** der Stator (7) zwei Blechtypen (13c, 13d) aufweist, die einen rückspringenden Absatz (14) bilden, der imstande ist, einen ferromagnetischen Ring (12) aufzunehmen.

8. Elektromotor nach einem der vorhergehenden Ansprüche, **dadurch gekennzeichnet, dass** der Stator (7) einen Außenkranz (11) aufweist, der nach dem Bewickeln der Zähne angeordnet worden ist, um das Schließen des Magnetkreises sicherzustellen.

9. Elektromotor nach dem vorhergehenden Anspruch, **dadurch gekennzeichnet, dass** die Zähne (4b), die keine Wicklungen (5) tragen, eine Bohrung (6) in dem Teil aufweisen, der sich verbreitert, um einen Mantelring zu bilden.

10. Getriebemotorbaugruppe, umfassend einen Motor nach Anspruch 1, der eine mechanische Bewegungsumwandlungsbaugruppe und eine Welle am Ausgang der Umwandlungsbaugruppe umfasst, sowie ein elastisches Rückstellsystem, das vor oder hinter dem mechanischen Umwandlungssystem angeordnet ist.

## Claims

1. Single or polyphase electric motor comprising a stator carrying three coils and consisting of 12 x N straight teeth extending radially, N being an integer greater than or equal to 1, and of equal angular width *alpha,* measured at their end from the center of the motor, and a rotor having P pairs of magnetized poles such that P = 5 + 2 x R, P not being a multiple of three, R being an integer greater than or equal to 0, where *alpha* is between [360°/(12 x N)]/3 and [360°/(12 x N)]/2, and the coils (5), of which there are three, are installed on teeth (4a) so as to be spaced 60° apart and are generally distributed over an angular spacing (theta) of less than or equal to 120°.

2. Electric motor according to claim 1, **characterized in that** *alpha* is between [360°/(12 x N)]/3 and [360°/(12 x N)]/2.1.

3. Electric motor according to either of the preceding claims, **characterized in that** the P pairs of poles on the rotor are radially magnetized.

4. Electric motor according to any of claims 1 to 3, **characterized in that** the P pairs of poles on the rotor are axially magnetized.

5. Electric motor according to any of the preceding claims, **characterized in that** the stator (7) is produced by a stack of two different types of metal sheets (13a, 13b), the adjacent stator teeth (4) being in contact with the first type of metal sheet (13a) via saturable magnetic isthmuses (10).

6. Electric motor according to any of claims 1 to 5, **characterized in that** at least one ferromagnetic ring (12) is inserted in the air gap (15) between the teeth (4) of the stator (7) and the magnetized rotor.

7. Electric motor according to any of claims 1 to 5, **characterized in that** the stator (7) comprises two types of metal sheets (13c, 13d) forming a recess (14) capable of receiving a ferromagnetic ring (12).

8. Electric motor according to any of the preceding claims, **characterized in that** the stator (7) has an outer ring (11) placed after the winding of the teeth in order to ensure the closing of the magnetic circuit.

9. Electric motor according to the preceding claim, **characterized in that** the teeth (4b) not carrying the coils (5) have a bore (6) in the part which widens to form a peripheral belt.

10. Geared motor assembly comprising a motor according to claim 1 comprising a mechanical movement transformation assembly and a shaft at the output of said transformation assembly as well as a resilient return system positioned upstream or downstream of the mechanical transformation system.
